# EUROPÄISCHE PATENTSCHRIFT

(11) **EP 1 433 352 B1**
(45) Veröffentlichungstag und Bekanntmachung des Hinweises auf die Patenterteilung: **01.09.2010**
(21) Anmeldenummer: 02776778.9
(22) Anmeldetag: 04.10.2002
(51) Int. Cl.: H04Q 11/04, H04L 12/56

(54) **VERTEILTE ÜBERMITTLUNG VON VERKEHRSSTRÖMEN IN KOMMUNIKATIONSNETZEN**
DISTRIBUTED TRANSMISSION OF TRAFFIC FLOWS IN COMMUNICATION NETWORKS
TRANSMISSION REPARTIE DE FLUX DE TRAFIC DANS DES RESEAUX DE COMMUNICATION

(30) Priorität: 04.10.2001 DE 10148893; 14.12.2001 DE 10161508; 14.12.2001 DE 10161547
(43) Veröffentlichungstag der Anmeldung: 30.06.2004
(73) Patentinhaber: Nokia Siemens Networks GmbH & Co. KG, 81541 München (DE)
(72) Erfinder: SCHRODI, Karl, 82538 Geretsried (DE)
(86) Internationale Anmeldenummer: PCT/DE2002/003750
(87) Internationale Veröffentlichungsnummer: WO 2003/032676

(56) Entgegenhaltungen:
- EP-A- 0 817 436
- EP-A- 0 926 921
- WO-A-00/38375
- PETIT G H ET AL: "PERFORMANCE EVALUATION METHODS APPLICABLE TO AN ATM MULTI-PATH SELF-ROUTING SWITCHING NETWORK" , TELETRAFFIC AND DATATRAFFIC IN A PERIOD OF CHANGE. COPENHAGEN, JUNE 19 - 26, 1991, PROCEEDINGS OF THE INTERNATIONAL TELETRAFFIC CONGRESS, AMSTERDAM, NORTH HOLLAND, NL, VOL. CONGRESS 13, PAGE(S) 917-922 XP000303130 das ganze Dokument

## Beschreibung

Der Gegenstand der Erfindung liegt auf dem Gebiet der verteilten Übermittlung von Verkehrsströmen in Kommunikationsnetzen. Das Kommunikationsnetz kann von der in der Patentanmeldung DE 10161508.6, veröffentlicht in der Druckschrift WO 2003026230 A2, offenbarten Art sein.

In einem Kommunikationsnetz soll der Verkehr nach bestimmten Regeln möglichst gleichmäßig auf alle Knoten und Verbindungsleitungen im Kommunikationsnetz - auch 'Netz' genannt - verteilt werden.

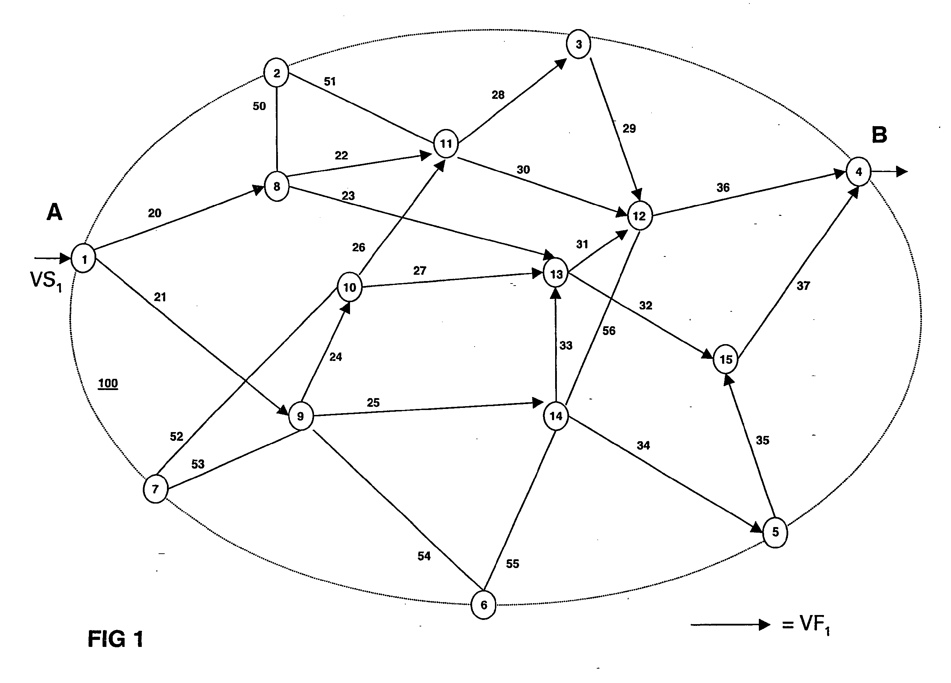

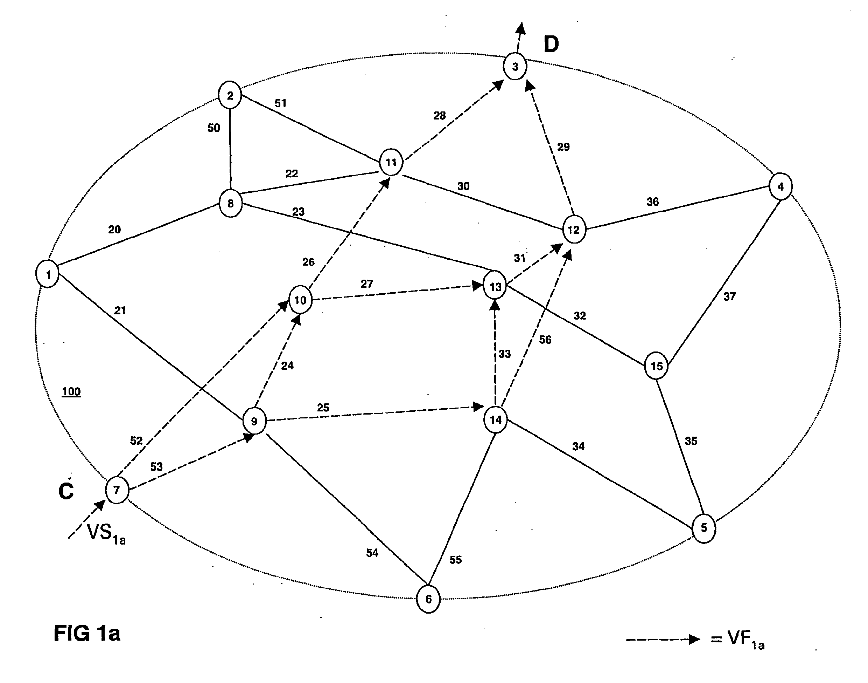

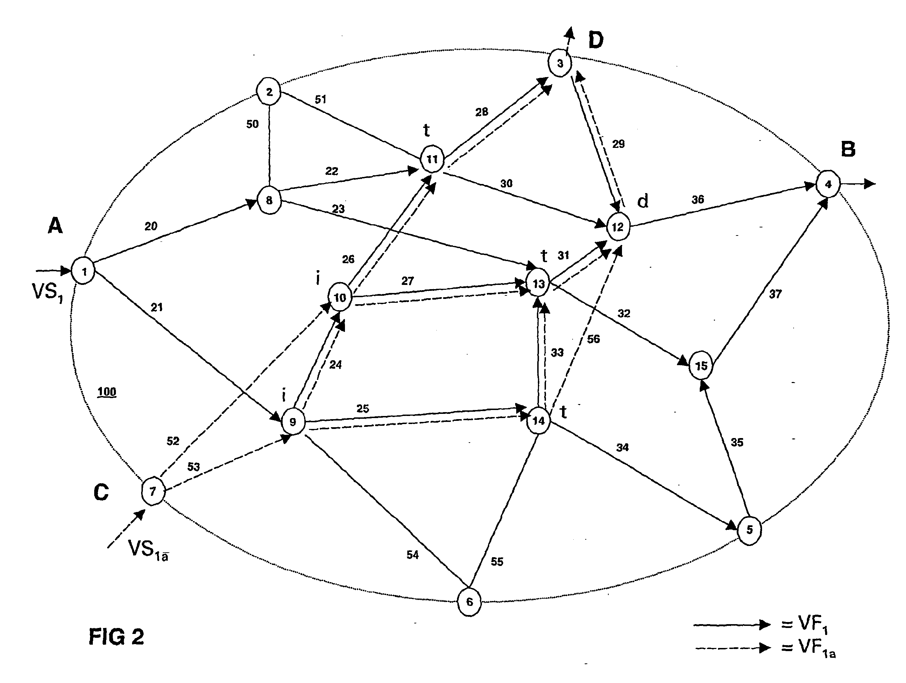

Es ergibt sich bei dieser Art der Verteilung für jede Kommunikationsbeziehung von einem bestimmten Eingang A zu einem bestimmten Ausgang B ein sog. 'Verteilungsfächer', der alle für diese Kommunikationsbeziehung sinnvoll nutzbaren Knoten und Verbindungswege umfasst (siehe FIG 1). Ein Verfahren zur Erzeugung eines solchen Verteilungsfächers ist in der Patentanmeldung DE 10161547.7, veröffentlicht in der Druckschrift WO 2003026228 A1, angegeben. In einem entsprechend vermaschten Netz überlappen sich dabei zwangsläufig die Verteilungsfächer verschiedener Kommunikationsbeziehungen derart, dass an den einzelnen Knoten entweder identische oder sich teilweise überlappende oder aber auch völlig disjunkte 'Verzweigungsmuster' entstehen (siehe FIG 2). Die Überlappung hängt dabei von den in den Netzknoten zum Einsatz kommenden Verteilungsmechanismen ab.

Die Druckschrift EP 0 926 921 Al offenbart einen Router mit Ports zum Austausch von Datenpaketen, wobei die Datenpakete für jeden Ausgangsport jeweils einer von zwei Warteschlangen gemäß einer im Datenpaket enthaltenen Eigenschaft zugewiesen und dann von einem Scheduler zur Übertragung auf dem Port abgeholt werden.

EP 0 817 436 A2 offenbart Mechanismen zur Verbesserung der Übertragungseigenschaften von Datenpaketflüssen unterschiedlicher Prioritätsklassen, die gemeinsame Übertragungsressourcen eines Kommunikationsnetzes nutzen.

WO 00/38375. beschreibt Verfahren und Netzknoten zur priorisierten Vermittlung von Datenpaketen unter Verwendung von Eingängspufferspeichern und virtuellen Ausgangspufferspeichern, wobei der Transfer der Datenpakete von einem Eingang zu einem bestimmten Ausgang des Netzknotens durch den jeweiligen Ressourcen zugeordnete Verkehrssteuereinheiten bestimmt wird.

In allen drei genannten Druckschriften wird der Verkehr auf der Ausgangsseite auf in sich geschlossene, nicht näher unterteilte Ressourcen, z.B. physikalische Links oder logische Ports, zugewiesen.

Bisher sind folgende Mechanismen zur individuellen Verteilung von Datenpaketen auf abgehende Bündel bekannt:
1) Einfache Verteilung des ankommenden Verkehrs auf ein abgehendes Bündel ohne Prioritäten:
   (a) Vorabverteilung des Verkehrs in individuelle Warteschlangen pro Port:
      Ein zentraler Verkehrsverteiler verteilt den ankommenden Verkehr auf einzelne Warteschlangen, von denen jeweils eine genau einem abgehenden Port des Bündels zugeordnet ist. Die Verteilung kann zyklisch oder (z.B. bei unterschiedlichen PortBandbreiten) gewichtet nach verschiedenen Kriterien erfolgen. Dabei kann z.B. auch der aktuelle Füllstand der einzelnen Warteschlangen (nach der Zahl der Pakete oder bei variablen Paketlängen nach der echten Datenmenge in Bytes) oder die individuelle Länge des aktuell zuzuteilenden Datenpaketes berücksichtigt werden. Die Ports bedienen die Warteschlangen in der Regel nach dem FIFO-Prinzip. Was einmal in einer Queue steht, muss dann auch vom zugeordneten Port abgearbeitet werden.
   (b) Verwendung einer einzigen Warteschlange mit einem Multi Server Prinzip:
      Eine günstige Verteilung des Verkehrs mit gleichzeitig optimaler Ausnutzung der verfügbaren Portkapazitäten kann mit dem Multi-Server-Prinzip erreicht werden. Dabei werden alle ankommenden Datenpakete in eine einzige Warteschlange eingereiht, aus der sich die Ports, wann immer sie frei sind bzw. frei werden, meist nach einem FIFO (First In First Out) Prinzip das nächste zu bedienende Paket abholen.
2) Verteilung des ankommenden Verkehrs auf ein abgehendes Bündel mit Prioritäten
   (a) Vorabverteilung des Verkehrs in individuelle Prioritäts-Warteschlangen pro Port:
      Ein zentraler Verkehrsverteiler verteilt den ankommenden Verkehr auf einzelne Warteschlangen, wobei für jeden abgehenden Port pro Prioritätsklasse jeweils eine individuelle Warteschlange bereitgestellt wird. Die Varianten gemäß 1 (a) sind analog anwendbar. Bei der Bedienung der Warteschlangen berücksichtigen die Ports die Prioritäten nach entsprechenden Regeln ('strikt', 'gewichtet', USW.)
   (b) Multi Server Prinzip mit je einer Warteschlange pro Prioritätsklasse:
      Wie 1 (b), wobei die höherprioren Warteschlangen entsprechend der Prioritätsregeln bevorzugt bedient werden.
3) Verteilung des ankommenden Verkehrs auf ein abgehendes Bündel mit prioritätsgesteuertem Per Flow Queueing:
   Eine Verfeinerung der oben beschriebenen elementaren Mechanismen besteht darin, zur granulareren Unterscheidung und Priorisierung zwischen verschiedenen individuellen Kommunikationsbeziehungen (Flows) auch individuelle und separate Queues per Flow einzurichten. Damit wird jedoch der Aufwand für Queueing (wg. Zahl der Warteschlangen) und Scheduling (wg. Auswahl des nächsten auszugebenden Paketes aus der Vielzahl der Warteschlangen) um ein Vielfaches erhöht und sehr viel mehr von den Verkehrsmustern (d.h. Zahl der gleichzeitig aktiven Flows) abhängig. Zusätzlich muss dabei auch auf eine faire Verteilung der Ressourcen zwischen gleich priorisierten Flows geachtet werden, wofür spezielle Mechanismen wie z.B. 'Weighted Fair Queueing' (WFQ) oder ähnliches eingesetzt werden, deren Komplexität (vor allem bei einer sehr großen Zahl von Queues) die eines einfachen Priority-Queueings um ein Vielfaches übersteigen kann. Selbstverständlich lässt sich Per Flow Queueing sowohl portindividuell [obiges Muster (a)] als auch in Verbindung mit dem Multi-Server-Prinzip [obiges Muster (b)] einsetzen.
4) ECMP (Equal Cost Multiple Path):
   ECMP sieht eine Verteilung auf mehrere Ports vor. Es werden hierbei nur diejenigen Ports eines Übermittlungsknotens berücksichtigt, deren angeschlossene physikalische Leitungen zum,selben benachbarten Übermittlungsknoten führen. Auf diese Weise (d.h. durch Lastverteilung auf mehrere physikalische Leitungen) kann die Übermittlungskapazität zwischen zwei benachbarten Übermittlungsknoten auch dann gesteigert werden, wenn die Übermittlungskapazität einer bestehenden einzigen physikalischen Leitung nicht weiter gesteigert werden kann.

Bei allen genannten Verfahren wird bei der Implementierung in den Warteschlangen in der Regel lediglich ein Zeiger (Adresse) zur Identifizierung des jeweiligen Datenpakets in einem üblicherweise gemeinsamen Datenspeicher abgelegt. Die Reihenfolge der Bedienung ergibt sich implizit aus der Reihenfolge der Einträge in der Warteschlange (z.B. nach dem FIFO Prinzip) bzw. aus dem vorgelagerten Verfahren zur Auswahl der als nächstes zu bedienenden Warteschlange (z.B. nach Priorität und bei gleicher Priorität z.B. zyklisch, longest queue first, shortest queue first, nach Gewichtung wie bei WFQ).

Um zusätzliche spezielle Effekte zu erzielen, können weitere Informationen in diese Scheduling-Entscheidung mit einbezogen werden. Vor allem in der ATM Technik wird sehr häufig (aber vereinzelt auch im IP Umfeld) von der Notwendigkeit eines Traffic Shaping gesprochen. Mit diesem Verfahren sollen in der Regel bestimmte Bandbreiten, meist realisiert durch entsprechende Abstandskriterien zwischen den Zellen (Paketen) einer Verbindung (d.h. Kommunikationsbeziehung), eingehalten werden. Dazu werden zusätzliche Zeitinformationen gespeichert, die einen frühesten, spätesten und/oder optimalen Bedienungszeitpunkt für eine Warteschlange oder eine bestimmte Zelle (Paket) angeben (sog. 'Kalender').

Die Mechanismen lassen sich mit gleicher Wirksamkeit auch für die Anwendung auf mehrere Bündel erweitern, sofern diese Bündel sich entweder gar nicht überlappen (disjunkt sind) oder sich vollständig überlappen '(identisch sind). Ein Lösungsansatz für eine faire und effiziente päketweise Verkehrsverteilung auf sich teilweise überlappende Bündel mit Berücksichtigung von Prioritäten ist jedoch nicht bekannt.

Eine Aufgabe der Erfindung liegt nun darin aufzuzeigen, wie in den Netzknoten unter Berücksichtigung einer evtl. vorgesehenen Priorisierung einzelner Verkehrsströme oder individueller Datenpakete der Verkehr gemäß von vorgegebenen Verzweigungsmustern möglichst optimal auf die abgehenden Verbindungsleitungen verteilt werden kann, wobei jeder Netzknoten autonom und individuell pro Datenpaket entscheiden soll.

Diese Aufgabe wird durch die Erfindung gelöst. Die Erfindung sieht vor, dass in einem erfindungsgemäßen Netzknoten pro aktuellem Verzweigungsmuster zumindest je eine Warteschlange vorgesehen ist. Dabei kann eine Warteschlange durchaus für mehrere Verteilungsfächer, die sich in diesem Knoten auf dasselbe Verzweigungsmuster abbilden, gemeinsam benutzt werden.

Ankommende Pakete werden nach ihrer Zugehörigkeit zu einem bestimmten Verteilungsfächer (d.h. nicht nach der Zugehörigkeit zu einem bestimmten Flow innerhalb des Verteilungsfächers) unterschieden. Entsprechend werden sie in eine zugehörige Warteschlange eingetragen.

Ein mit besonders schönen Vorteile verbundener Aspekt der Erfindung ergibt sich aus einer beispielhaften Ausführung, bei der die Warteschlangen von den zum jeweiligen Verzweigungsmuster gehörenden Ports bedient werden. Sobald ein Port frei wird, wählt er die als nächstes von ihm zu bedienende Warteschlange aus. Die Auswahl beginnt so rechtzeitig, dass auf der abgehenden Leitung keine Lücke entsteht. Bedient ein Port mehrere (in diesem Falle sich ganz oder teilweise überlappende) Verzweigungsmuster, so wird bei dieser Auswahl zunächst über alle diese Verzweigungsmuster nach nicht leeren Warteschlangen gesucht. Werden dabei mehrere nicht leere Warteschlangen aus verschiedenen Verzweigungsmustern gefunden, so wird nach einem vorgegebenen Kriterium entschieden, welche Warteschlange als nächste bedient wird. Das aus dieser Warteschlange auszugebende Paket wird dann nach einem weiteren Kriterium bestimmt.

Vorteilhaft ist hierbei die Anzahl der benötigten Queues begrenzt und lediglich von der Topologie des Netzes, d.h. der Anzahl der Nachbarknoten unter Berücksichtigung einer Bündellung von Ports, aber nicht vom Verkehr abhängig.

Es gibt keinerlei Probleme bei einem Einsatz in gemischten Netzen, da die Erfindung nur lokal in einem gegebenen Netzknoten zum Einsatz kommt.

Weitergehende vorteilhafte Ausgestaltungen der Erfindung ergeben sich aus den nachfolgenden beispielhaften Ausführungen der Erfindung:
- Zur Delay Optimierung werden mehrere, mit unterschiedlicher Priorität gekennzeichnete Warteschlangen innerhalb eines Verzweigungsmusters vorgesehen. Die Warteschlangen innerhalb eines Verzweigungsmusters werden strikt nach deren Priorität abgearbeitet. Bedient ein Port mehrere (in diesem Falle sich ganz oder teilweise überlappende) Verzweigungsmuster, so wird zunächst über alle diese Verzweigungsmuster nach der höchstprioren, nicht leeren Warteschlange gesucht und diese wird bedient. Werden dabei mehrere nicht leere Warteschlangen derselben Priorität aus verschiedenen Verzweigungsmustern gefunden, so erfolgt die Arbitrierung zwischen diesen Warteschlangen nach einem frei wählbaren Kriterien, z.B. dem Zufallsprinzip, einer zyklischen Reihenfolge, der Größe der Bündel, der Warteschlangenlänge (löngest/shortest first), der vergangenen Zeit seit der letzten Bedienung dieser Warteschlange, der Anzahl der Ports, die für ihre Bedienung zuständig sind.
   Durch den Einsatz priorisierter Warteschlangen wird mit vergleichsweise geringem Aufwand eine ausreichend gute Delay- und Verteilungsqualität bewirkt.
- Zur Optimierung auf den minimal möglichen Delay für jedes Paket werden ebenfalls mehrere, mit unterschiedlicher Priorität gekennzeichnete Warteschlangen innerhalb eines Verzweigungsmusters vorgesehen, die innerhalb eines Verzweigungsmusters nach strikter Priorität abgearbeitet. Bedient ein Port mehrere (in diesem Falle sich ganz oder teilweise überlappende) Verzweigungsmuster, so wird zunächst über alle diese Verzweigungsmuster nach der höchstprioren nicht leeren Warteschlange gesucht und diese wird bedient. Werden dabei mehrere nicht leere Warteschlangen derselben Priorität aus verschiedenen Verzweigungsmustern gefunden, so wird zwischen diesen nach einem Zeitkriterium entschieden. Dazu wird in den Warteschlangen neben einem Speicherzeiger (Adresse, s.o.) eine zusätzliche, vorzugsweise relative, Zeitinformation ('TimeStamp') mit abgelegt, aus der abgelesen werden kann, wann das Paket in die Warteschlange eingetragen wurde bzw. wie lange es sich schon darin befindet (Bild 4). Ausgewählt wird dann die Warteschlange, an deren Spitze sich das schon am längsten wartende Paket befindet, wodurch als Kriterium ein FIFO Prinzip realisiert wird,
   Mit dieser Ausgestaltung wird vorteilhaft sichergestellt, dass mit jedem frei werdenden Port, auch bei sich nur teilweise überlappenden Bündeln, über alle von diesem Port bediente Verzweigungsmuster hinweg immer die momentan gerade dringendste Anforderung mit der minimal möglichen Verzögerung bedient wird. Dies ist besonders dann sehr vorteilhaft, wenn als hochpriore Verkehrströme Daten interaktiver Echtzeitdienste, z.B. Telephon- oder Videokonferenzdienste, übermittelt werden.
- Das paketindividuelle Zeitkriterium wird nicht bei allen Warteschlangen verwendet, sondern nur bei hochprioren Verkehr (bspw. zeitkritischen Echtzeitanwendungen), um diesen mit dem kleinstmöglichen Delay und der entsprechend fairen Verteilung abzufertigen. Warteschlangen, die Verkehr ohne spezielle Delayanforderungen oder einfach nur Best Effort-Verkehr bedienen, können niedriger priorisiert und ohne Berücksichtigung dieser Zeitinformation behandelt werden. Prinzipiell reicht es aus, die Zeitinformation nur für die entsprechend hochprioren Warteschlangen zu speichern und auszuwerten.
   Die Granularität von Zeitinformation sollte die minimale Übertragungszeit eines Pakets, d.h. des kürzest möglichen Pakets auf der schnellsten Leitung des Bündels, berücksichtigen. Der mögliche Wertebereich sollte so gewählt werden, dass ein Überlauf innerhalb der erwarteten maximalen Verzögerungszeit eines entsprechend hochprioren Paketes nicht auftritt (Berücksichtigung der maximalen Längen der zugehörigen Queues, Portbandbreiten etc.) und jederzeit eine sichere Entscheidung möglich ist. Dabei kann auch eine evtl. eingestellte Limitierung des hochprioren Verkehrs im Netz mit berücksichtigt werden mit dem Vorteil kürzerer Warteschlangen.
   Die Implementierung kann über einen einfachen, regelmäßig getakteten Rundzähler (Neustart bei Überlauf) erfolgen. Der Zähler ist nur lokal relevant, eine Synchronisation zwischen den Knoten ist nicht, erforderlich, die Taktgenauigkeit unterliegt keinen spezifischen Anforderungen, eine Mischung von Knoten mit und ohne diesen Mechanismus im selben Netz ist jederzeit möglich. (Der Mechanismus betrifft nur die individuelle, lokale Arbeitsweise innerhalb eines Knotens.)
- Das Zeitkriterium wird auch dazu verwendet, um Pakete, die aus irgendwelchen Gründen zu lange gewartet haben und deren weitere Übertragung (im Rahmen der zugehörigen Echtzeitanwendung) nicht mehr sinnvoll erscheint, auszusortieren und zu verwerfen. Dies kann entweder beim Schedulen oder durch einen separaten, parallel laufenden Prozess erfolgen. Ein solcher Prozess könnte Z.B. die Zeitinformation beim Eintragen des Paketes in die Warteschlange auf einen definierten Anfangswert setzen, sie regelmäßig getaktet auf oder abwärts zählen und beim Erreichen eines bestimmten Grenz- oder Schwellenwertes entsprechende Aktionen, z.B. Entfernen des Paketes aus der Warteschlange, triggern. Alternativ könnte auch die Differenz zwischen dem Eintragszeitpunkt (als unveränderlicher Wert) und der aktuellen Zeit (die mitgezählt wird) in einem sich regelmäßig wiederholenden Vergleich als Entscheidungskriterium herangezogen werden.
- Die Warteschlangen werden von den Ports nach dem Multi Server Prinzip bedient. Das Multi-Server-Prinzip garantiert eine faire Zuteilung und die optimale Nutzung der verfügbaren Ressourcen auch und gerade bei variablen Paketlängen. Der Scheduling Prozess wird vom ausgehenden Port genau dann angestoßen, wenn dieser frei wird. Dies geschieht aber (unter Kenntnis der (Rest-)Länge des momentan bedienten Pakets) so rechtzeitig, dass die Entscheidung und das nächste auszugebende Paket rechtzeitig mit dem Ende des vorhergehenden zur Ausgabe bereitsteht. Ein weiterer großer Vorteil des Multi-Server-Prinzips besteht auch darin, dass bei Ports unterschiedlicher Bandbreite diese Unterschiede dadurch, dass frei werdende Ports sich quasi selbst neue Daten aus der (den) Queue(s) holen, automatisch bei der Verteilung berücksichtigt werden.
- Die Auswahl der als nächstes von einem Port zu bedienenden Warteschlange erfolgt mit Hilfe einer Scheduling-Funktion.
- Es werden weitere getrennte Warteschlangen eingesetzt, um zusätzliche, ggf. pro Verteilungsfächer unterschiedliche Kriterien zu berücksichtigen.
- Das weitere Kriterium ist ein FIFO (First In First Out).
- Die Warteschlangen werden nur bei Bedarf angelegt. Längere zeit nicht verwendete Queues werden wieder freigegeben (time-out). Hierdurch wird die Zahl der tatsächlich benötigten Warteschlangen reduziert, weil die Zahl der aktuellen Verzweigungsmuster meist kleiner sein dürfte als die Zahl der aktuellen Kommunikationsbeziehungen.
- Die Verkehrsströme werden gezielt ungleichmäßig nach entsprechenden Vorgaben verteilt. Hierzu werden weitere Kriterien in die Verteilungsentscheidung mit einbezogen werden.
- Es wird eine adaptive Annäherung an einen erwünschten Zielwert der Verteilung vorgesehen. Bei sich teilweise überlappenden Bündeln ist es möglich, dass die angestrebten gleichmäßigen bzw. vorgegebenen Verteilung nicht optimal bewirkt wird, weil sich Interferenzen zwischen den Bündeln störend auswirken.
   Eine einfache Alternative sieht vor, diese voraus zu berechnen und bei der Vorgabe der Scheduling-Regeln zu berücksichtigen.
   In komplexen Fällen (z.B. unter sich immer wieder ändernden realen Netzbedingungen), in denen das Netzverhalten und mithin das Verhalten der Komponenten der Erfindung nicht zuverlässig vorausberechnet werden kann, ist es von Vorteil, die Scheduling-Parameter im Betrieb adaptiv anpassen zu können.
   Dies kann entweder im Knoten autonom oder durch einen Anstoß von außen (Vorgabe neuer Regeln) erfolgen.
   Als regulierendes Kriterium kann dazu der Vergleich (resp. die Abweichung) der tatsächlich erzielten Verteilung mit (von) der gewünschten Verteilung dienen. Vorzugsweise sollte dazu im Knoten z.B. die Häufigkeit der Bedienung der verschiedenen Warteschlangen durch die verschiedenen Ports (oder die resultierende Last der Ports pro Verkehrsklasse) gemessen und für die korrigierende Einheit verfügbar gemacht werden.
   Für netzweite Korrekturen können auch Angaben über die mittleren und die maximal aufgetretenen Längen der verschiedenen Warteschlangen von Bedeutung sein.
   Vorzugsweise werden diese Messungen und Verfahren auf Basis der Anzahl der Pakete vorgenommen. Hierbei wird davon auszugehen, dass sich die Auswirkungen von variabel langen Pakete über relativ kurze Zeiträume ausmitteln. Alternativ können diese Betrachtungen und Messungen auch unter Berücksichtigung der individuellen Längen aller einzelnen Pakete angestellt werden.
- Zur Realisierung einer bestimmten Lastverteilung innerhalb eines Bündels wird pro Queue für jeden Port eine Zeitinformation gehalten und beim Scheduling mitberücksichtigt.
   Die Zeitinformation enthält z.B. die letzten Bedienungszeitpunkte der Queue durch die verschiedenen Ports.
   Vorteilhaft kann hiermit z.B. portindividuell ein bestimmter Mindest- und/oder Maximalabstand zwischen zwei Bedienungen eingestellt werden oder die Zeiten könnten relativ zueinander bewertet werden ('Port x kommt erst wieder dran, wenn er doppelt so lange nicht dran war wie Port y'). Solche Zeitinformationen könnten auch zur Bestimmung eines nächsten Ziel-Bedienungszeitpunktes (frühestens, spätestens, optimal) verwendet werden oder gleich als solche abgespeichert werden (kalander).
   Eine alternative und vergleichsweise einfachere Lösung besteht darin, für jede Queue lediglich mitzuzählen, wie oft sie von welchem Port bedient wurde, und daraus die Entscheidung abzuleiten, ob sie aktuell mit berücksichtigt werden darf. Die Zähler könnten intervallweise oder auch gleitend (Leaky Bucket) zurückgesetzt bzw. dekrementiert werden.
   Auch bei diesen Varianten könnten die Vorgaben und Regeln wie oben beschrieben mit Hilfe von Messergebnissen adaptiv angepasst werden.

Die Erfindung wird auch anhand von in den Figuren dargestellten Ausführungsbeispielen näher erläutert. Es zeigt hierbei:
- Figur 1: einen ersten Verteilungsfächer, der alle für eine Kommunikationsbeziehung von einem Sendeknoten A zu einem Empfangsknoten B in einem Netz sinnvoll nutz- baren Netzknoten und -kanten umfasst,
- Figur 1a: einen zweiten Verteilungsfächer, der alle für eine Kommunikationsbeziehung von einem Sendeknoten C zu einem Empfangsknoten D in dem Netz nach Figur 1 sinnvoll nutzbaren Netzknoten und -kanten umfasst,
- Figur 2: die beiden, zum Teil überlappenden Verteilungsfä- cher, gemeinsam dargestellt in dem Netz nach Fi- gur 1,
- Figur 3: die Grundform einer erfindungsgemäßen Lösung (noch ohne 'Timestamp') mit n=1 für die elementarste Aus- gestaltung der Erfindung, wobei durch die Pfeil- richtung andeutet wird, dass der Port sich das nächste auszugebende Paket abholt, und wobei die gestrichelten Dreiecke für die dabei (vom Port aus) aktivierte Scheduling Funktion stehen,
- Figur 4: eine erfindungsgemäße Lösung mit Timestamp Informa- tion für die Pakete der höchstprioren Queue (das Timestamp Prinzip kann selbstverständlich auch für niederpriore Queues bis hin zum Best Effort einge- setzt werden), die vom Scheduler mit ausgewertet wird, wobei durch die Pfeilrichtung andeutet wird, dass der Port sich das nächste auszugebende Paket abholt, und wobei die gestrichelten Dreiecke für die dabei (vom Port aus) aktivierte Scheduling Funktion stehen,
- Figur 5: eine erfindungsgemäße Lösung mit weiteren Hilfsre- gistern pro Queue (mit Hilfsinformationen zum An- steuern einer vorgegebenen Verkehrsverteilung für die jeweilige Verzweigungsgruppe in dem sie bedie- nenden Bündel), wobei durch die Pfeilrichtung an- deutet wird, dass der Port sich das nächste auszu- gebende Paket abholt, und wobei die gestrichelten Dreiecke für'die dabei (vom Port aus) aktivierte Scheduling Funktion stehen,

In Figur 1 ist ein Beispiel für einen Verteilungsfächer VF₁ in dem Kommunikationsnetz 100 dargestellt. Das Netz 100 umfasst mehrere Netzknoten 1-15, wobei die Netzknoten 1-7 als Eingangs- und/oder Ausgangsknoten ausgebildet sind. Es wird ausgehend von dem vorliegend als Sendeknoten A ausgebildeten Netzknoten 1 zumindest ein Verkehrsstrom VS₁ an den vorliegend als Empfangsknoten B ausgebildeten Netzknoten 4 wie folgt verteilt übermittelt:

| von Knoten | über Kante | zu Knoten |
|---|---|---|
| **1 (A)** | 20 | 8 |
| | 21 | 9 |
| 8 | 22 | 11 |
| | 23 | 13 |
| 9 | 24 | 10. |
| | 25 | 14 |
| 10 | 26 | 11 |
| | 27 | 13 |
| 11 | 28 | 3 |
| | 30 | 12 |
| 13 | 31 | 12 |
| | 32 | 15 |
| 14 | 33 | 13 |
| | 34 | 5 |
| 3 | 29 | 12 |
| 5 | 35 | 15 |
| 12 | 36 | **4 (B)** |
| 15 | 37 | **4 (B)** |

Es ist gut zu erkennen, dass von jedem Netzknoten zwischen den Knoten A und B, vom dem mehr als ein Restweg zum Empfangsknoten B ausgeht, der an diesen gesendete Verkehr auf zumindest zwei Restwege verteilt übermittelt wird. Für die Netzknoten 1, 8, 9, 10, 11, 13 und 14 entspricht die mittlere Spalte dem jeweiligen knoteninternen Verzweigungsmustern, auf die der Verteilungsfächer VF₁ abgebildet wird. Für die Netzknoten 3, 5, 12 und 15 existieren in Ermangelung von unterschiedlichen Netzkanten keine echten Verzweigungsmuster, auf die der Verteilungsfächer VF₁ abgebildet werden könnte.

In Figur 1a ist ein zweites Beispiel für einen Verteilungsfächer VF₁ₐ in dem Kommunikationsnetz 100 dargestellt. Es wird ausgehend von dem vorliegend als Sendeknoten C ausgebildeten Netzknoten 7 zumindest ein Verkehrsstrom VS₁ₐ an den vorliegend als Empfangsknoten D ausgebildeten Netzknoten 3 wie folgt verteilt übermittelt:

| von Knoten | über Kante | zu Knoten |
|---|---|---|
| **7 (C)** | 52 | 10 |
| | 53 | 9 |
| 9 | 24 | 10 |
| | 25 | 14 |
| 10 | 26 | 11 |
| | 27 | 13 |
| 14 | 33 | 13 |
| | 56 | 12 |
| 13 | 31 | 12 |
| 12 | 29 | **3 (D)** |
| 11 | 28 | **3 (D)** |

Es ist wiederum gut zu erkennen, dass von jedem Netzknoten zwischen den Knoten C und D, vom dem mehr als ein Restweg zum Empfangsknoten D ausgeht, der an diesen gesendete Verkehr auf zumindest zwei Restwege verteilt übermittelt wird. Für die Netzknoten 7, 9, 10 und 14 entspricht die mittlere Spalte dem jeweiligen knoteninternen Verzweigungsmustern, auf die der Verteilungsfächer VF₁ₐ abgebildet wird. Für die Netzknoten 11, 12 und 13 existieren in Ermangelung von unterschiedlichen Netzkanten keine echten Verzweigungsmuster, auf die der Verteilungsfächer VF₁ₐ abgebildet werden könnte.

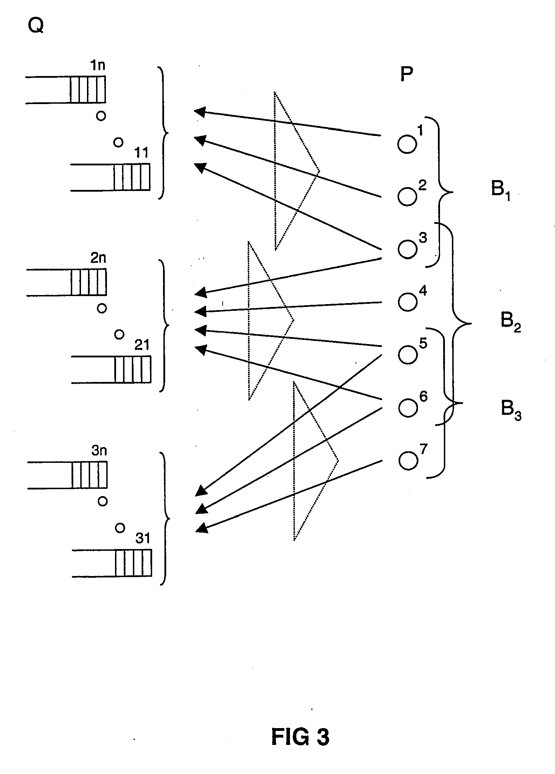

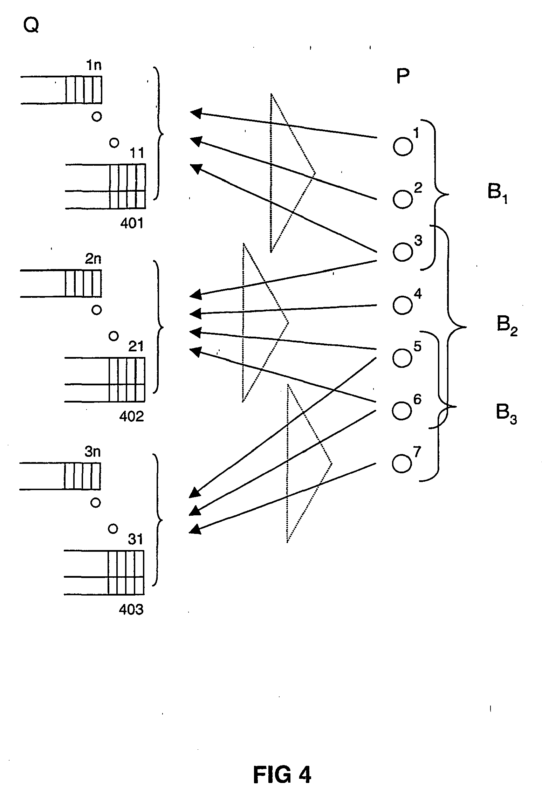

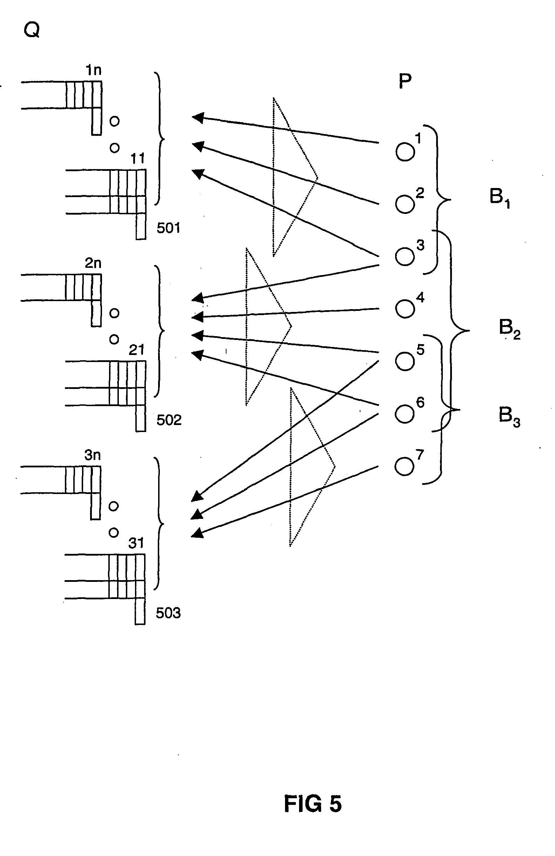

Es ist hierbei allerdings zu beachten, dass die Verzweigungsmuster in den Figuren 1, 1a und 2 lediglich die Struktur der Vermaschung zwischen den Knoten zeigen. Dies schließt nicht aus, dass an einer Kante der Graphen (d.h. zwischen zwei benachbarten Knoten) mehrere parallele physikalische Leitungen (und sogar auch mit unterschiedlichen Bandbreiten) liegen können, die bei der Verteilung als separate Ports wie in den Figuren 3 bis 5 betrachtet werden (können). Zur Verteilung auf mehrere Ports einer Kante können natürlich sehr wohl (unechte) Verzweigungsmuster existieren. Auf diese können die Verteilungsfächer VF grundsätzlich ebenfalls abgebildet werden, wenn auch hierdurch die angestrebte Verteilung des Verkehrs auf unterschiedliche Netzknoten 1-15 nicht herbeigeführt wird.

Schließlich sind die beiden Verteilungsfächer VF₁, VF₁ₐ in Figur 2 gemeinsam in dem Kommunikationsnetz dargestellt. So ist gut zu erkennen, wie sich die beiden Verteilungsfächer VF₁, VF₁ₐ in deren Netzknoten 9 und 10 auf identische Verzweigungsmuster i, in deren Netzknoten 11, 13 und 14 auf teilweise identische Verzweigungsmuster t und in deren Netzknoten 12 auf disjunkte Verzweigungsmuster d abbilden, wie nachfolgende Tabelle illustriert, in der unterschiedliche Kanten in Fettschrift markiert sind:

| Verzweigungsmuster (in Knoten) für ... | Verteilungsfächer VF₁ | Verteilungsfächer VF₁ₐ |
|---|---|---|
| i (9) | 24 | 24 |
| | 25 | 25 |
| i (10) | 26 | 26 |
| | 27 | 27 |
| t (11) | 28 | 28 |
| | ***30*** | - |
| t (13) | 31 | 31 |
| | ***32*** | - |
| t (14) | 33 | 33 |
| | ***34*** | - |
| | - | ***56*** |
| d (12) | ***36*** | - |
| | - | ***29*** |

Diese Verhältnisse sind in der nachfolgenden Tabelle nochmals mit unter besonderer Hervorhebung der unterschiedlichen Kanten dargestellt:

| Verzweigungsmuster (Knoten) | gemeinsame Kanten | unterschiedliche Kanten | |
|---|---|---|---|
| | VF₁, VF₁ₐ | VF₁ | VF₁ₐ |
| i (9) | 24, 25 | - | |
| i (10) | 26, 27 | - | |
| t (11) | 28 | 30 | |
| t (13) | 31 | 32 | |
| t (14) | 33 | 34 | 56 |
| d (12) | - | 36 | 29 |

Ein besonders schöner Vorteil der Erfindung liegt darin, dass bei Einsatz sich überlappender Verzweigungsmuster t durch, beliebige Kombination der Mechanismen a) Zeitkriterium pro Paket zur Delayoptimierung beim Arbitrieren, b) Einstellung einer vorgegebenen, bei Bedarf auch 'schiefen' Verkehrsverteilung, c) adaptive Nachregelung auf das angestrebte Verteilungsmuster, eine sehr flexible und für nahezu jede Netzanwendung optimierbare Adaptionen der Netzknoten 1-15 und mithin des Netzes 100 als Ganzem ermöglicht wird.

Ein Beispiel für eine gezielt ungleichmäßige Verteilung der Verkehrsströme VS nach entsprechenden Vorgaben mittels Einbeziehung weiterer Kriterien in die Verteilungsentscheidung liegt darin, beim Scheduling für bestimmte Ports P nach entsprechenden Regeln sporadisch eine bestimmte Warteschlange Q nicht zu berücksichtigen. Soll beispielsweise bei einer Verteilung auf vier Ports P der hoch- bzw. höchstpriore Verkehr einer Verzweigungsgruppe im Verhältnis 4:4:3:1 auf die vier Ports P verteilt werden, so wird vom Scheduler für den 3. Port P die höchstpriore Warteschlange dieser Verzweigungsgruppe bei jedem 4. Scheduling-Vorgang nicht berücksichtigt und für den 4. Port wird er nur bei jedem 4. Scheduling-Vorgang mit einbezogen. Dabei sollte das Gesamtvolumen des höchstprioren Verkehrs in jedem Fall (deutlich) unter der dafür bereitgestellten Gesamtkapazität (Port 1 + Port 2 + ¾ Port 3 + ¼ Port 4) des Bündels B bleiben.

Selbstverständlich können dabei auch Unsymmetrien der Portbandbreiten kompensiert werden. Hat z.B. der 4. Port P gegenüber den übrigen drei Ports P nur die halbe Bandbreite, soll aber dennoch ein Zwölftel des Gesamtverkehrs zugeteilt bekommen, so wird für ihn die entsprechende Warteschlange jedes 2. mal mit berücksichtigt.

Es sei betont, dass die Beschreibung der für die Erfindung relevanten Komponenten des Kommunikationsnetzes grundsätzlich nicht einschränkend zu verstehen ist. Für einen einschlägigen Fachmann ist insbesondere offensichtlich, dass die verwendeten Begriffe funktional,und nicht physikalisch zu verstehen sind. Somit können die Komponenten auch teilweise oder vollständig in Software und/oder über mehrere physikalische Einrichtungen verteilt realisiert werden.

## Patentansprüche

1. Netzknoten (1-15) eines paketorientierten Kommunikationsnetzes (100), dessen Knoten gemäß der Topologie des Netzes so untereinander verbunden sind, dass eine Mehrzahl von Wegen zwischen den Netzknoten.existiert, mit folgenden Merkmalen:
- der Netzknoten ist in zumindest einem Verteilungsfächer (VF) enthalten, der für eine konkrete Kommunikationsbeziehung zwischen.einem als Sendeknoten (A, C) ausgebildeten Netzknoten und einem als Empfangsknoten (B, D) ausgebildeten Netzknoten aus der Netztopologie abgeleitet ist und alle Netzknoten und Wege umfasst, die für eine verteilte Übermittlung von der Kommunkationsbeziehung zugeordneten Verkehrs strömen (VS) in dem Kommunikationsnetz sinnvoll genutzt werden können,
- für den Netzknoten ist ein Verzweigungsmuster (i, t, d) bestimmt, auf das der Verteilungsfächer abgebildgt ist und durch das ein Bündel (B) von abgehenden Ports (P) des Netzknotens festgelegt ist, auf die die dem Verteilungsfächer zugeordneten Verkehrsströme verteilt werden sollen, wobei die den Ports zugeordneten Wege zu zumindest zwei unterschiedlichen, benachbarten Netzknoten führen,
- der Netzknoten umfasst zumindest dann, wenn durch den Netzknoten zumindest ein Verkehrsstrom entsprechend dem Verzweigungsmuster aktuell verteilt übermittelt wird, zumindest ein Warteschlangensystem (Q₁₁-Q₁ₙ) für das Verzweigungsmuster, das zumindest eine Warteschlange (Q₁₁) umfasst.

2. Netzknoten nach Anspruch 1,
mit einem separaten Warteschlangensystem (Q₂₁-Q₂ₙ, Q₃₁-Q₃ₙ) für jedes Verzweigungsmuster (t, d), dessen Bündel sich von den Bündeln der übrigen Verzweigungsmuster in mindestens einem Port unterscheidet.

3. Netzknoten nach einem der vorstehenden Ansprüche,
in dem für den Fall, dass mehrere unterschiedliche Verteilungsfächer auf dasselbe Verzweigungsmuster abgebildet sind, wahlweise entweder ein separates Warteschlangerisystemen pro unterschiedlichem Verteilungsfächer oder ein einziges Warteschlangensystem für alle Verteilungsfächer vorgesehen ist.

4. Netzknoten nach einem der vorstehenden Ansprüchen, bei dem zumindest ein Warteschlangensystem zumindest zwei Warteschlangen umfasst, wobei zumindest eine der beiden Warteschlagen mit einer Priorität (401-403) gekenntzeichnet ist.

5. Netzknoten nach einem der vorstehenden Ansprüche,
mit einer Zeitinformation (501-503) zumindest für die in einer (hoch-) prioren Warteschlange wartenden Pakete, aus der abgelesen werden kann, wann die Pakete in die Warteschlange eingetragen wurden bzw. wie lange sie sich schon darin befinden.

6. Netzknoten nach dem vorstehenden Anspruch,
mit einem Wertebereich für die Zeitinformation, der unter Berücksichtigung der Übermittlungszeit des kürzest möglichen Pakets auf dem schnellsten Port so gewählt ist, dass ein Überlauf innerhalb einer gegebenen, maximalen Verzögerungszeit eines prioren Paketes nicht auftritt.

7. Netzknoten nach einem der beiden vorstehenden Ansprüche, umfassend einen separaten, parallel laufenden Prozess zum Aussortieren und/oder Verwerfen von Paketen, deren weitere Übermittlung unter Berücksichtigung der Zeitinformation nicht mehr sinnvoll erscheint.

8. Netzknoten nach einem der vorstehenden Ansprüche, umfassend eine zweite Zeitinformatiön für zumindest eine der Warteschlangen, durch die für jeden Port des der Warteschlange zugeordneten Bündels dessen, jeweils letzter Bedienzeitpunkt der Warteschlange angezeigt wird.

9. Verfahren zur Übermittlung von Verkehrsströmen (VS) in einem paketorientierten Kommunikationsnetz (100) durch einen Netzknoten (1-15), der nach einem der vorstehenden Vorrichtungsansprüche ausgebildet ist,
mit folgenden Schritten:
- ankommende Pakete werden unter Berücksichtigung des Verteilungsfächers (VF), dem sie zugeordnet sind, in eine dem jeweiligen Verteilfächer zugeordnete Warteschlange (Q) eingetragen,
- die Pakete werden über einen Port (P) eines Bündels (B) übermittelt, das durch die Abbildung des jeweils einschlägigen Verteilungsfächers auf ein netzknotenspezifisches Verzweigungsmuster bestimmt wird, wobei die den Ports eines Bündels zugeordneten Wege jeweils zu zumindest zwei unterschiedlichen, benachbarten Netzknoten führen.

10. Verfahren nach dem vorstehenden Anspruch,
bei dem die Verkehrsströme einer Verzweigungsgruppe gezielt ungleichmäßig über die Ports des zugeordneten Bündels verteilt übermittelt werden.

11. Verfahren nach einem der vorstehenden Ansprüche,
bei dem ein Scheduling-Prozess zur Entscheidung über die Ausgabe eines nächsten Pakets aus einer der Warteschlangen, die unter Berücksichtigung von Scheduling-Regeln getroffen wird, von einem der abgehenden Ports angestoßen wird.

12. Verfahren nach dem vorstehenden Anspruch,
bei der der Scheduling-Prozess von dem Port so rechtzeitig vor seinem Freiwerden angestoßen wird, dass die Entscheidung über das nächste auszugebende Paket und das nächste Paket selbst so rechtzeitig bereitsteht, dass das nächste Paket von dem Port im unmittelbaren Anschluss an das vorhergehende Paket übermittelt werden kann.

13. Verfahren nach einem der beiden vorstehenden Ansprüche,
bei dem im Falle von mehreren gefüllten Warteschlangen, die dem Port zugeordnet sind, die Scheduling-Regeln ein erstes vorgegebenes Kriterium umfassen, nach dem entschieden wird, welche Warteschlange als nächste bedient wird.

14. Verfahren nach dem vorstehenden Anspruch,
bei dem im Falle einer zumindest teilweisen Kennzeichnung der Warteschlangen mit Prioritäten ,(401-403) bei der Entscheidung die gefüllten Warteschlangen mit einer niedrigen Priorität solange unberücksichtigt bleiben, wie noch zumindest eine gefüllte Warteschlange mit einer im Vergleich zu diesen Warteschlangen höheren Priorität zu berücksichtigen ist.

15. Verfahren nach einem der beiden vorstehenden Ansprüche,
bei dem das erste Kriterium als eines der nachfolgenden Kriterien ausgebildet ist:
- Zufallsprinzip,
- zyklischen Reihenfolge,
- Größe der Bündel,
- kürzeste Warteschlange zuerst,
- längste Warteschlange zuerst,
- nach Gewichtung der Warteschlangen,
- vergangenen Zeit seit der letzten Bedienung dieser Warteschlange, insbesondere ausgebildet als FIFO Prinzip, bei dem die am längsten unbediente Warteschlange als nächste bedient wird, oder
- Anzahl der Ports, die für ihre Bedienung zuständig sind.

16. Verfahren nach einem der Ansprüche 11 bis 15,
bei dem die Scheduling-Regeln im Falle einer mit mehr als einem Paket gefüllten Warteschlange ein zweiten Kriterium umfassen, nach dem das nächste zu übermittelnde Paket bestimmt wird.

17. Verfahren nach dem vorstehenden Anspruch,
bei dem das zweite Kriterium als FIFO ausgebildet ist.

18. Verfahren nach einem der Ansprüche 11 bis 17,
bei dem eine Annäherung an einen erwünschten Verteilungszielwert durch adaptive Anpassung der Schedulirig-Regeln bewirkt wird.

19. Verfahren nach dem vorstehenden Anspruch,
bei dem die erforderliche Anpassung voraus berechnet und bei der Vergabe der Scheduling-Regeln berücksichtigt wird.

20. Verfahren nach einem der beiden vorstehenden Ansprüche, bei dem die Scheduling-Regeln im laufenden Betrieb des Kommunikationsnetzes adaptiv angepasst werden.

21. Verfahren nach dem vorstehenden Anspruch,
bei dem die Anpassung der Scheduling-Regeln im Netzknoten autonom und/oder durch einen Anstoß von außen erfolgt.

22. Verfahren nach einem der beiden vorstehenden Ansprüche,
bei dem die Anpassung unter Berücksichtigung eines regulierenden Kriteriums bewirkt wird.

23. Verfahren nach dem vorstehenden Anspruch,
bei dem das regulierende Kriterium einen Vergleich zwischen der tatsächlich erzielten Verteilung mit dem erwünschten Verteilungszielwert, eine Messung der Häufigkeit der Bedienung der verschiedenen Warteschlangen, eine Messung der resultierenden Last der Ports pro Verkehrsklasse, eine Messung der mittleren Länge der verschiedenen Warteschlangen und/oder eine Messung der maximal auftretenden Länge der verschiedenen Warteschlagen umfasst.

24. Verfahren nach dem-vorstehenden Anspruch,
bei die Messungen auf Basis der Anzahl der Pakete und/oder unter Berücksichtigung der individuellen Länge der einzelnen Pakete durchgeführt werden.

25. Verfahren nach einem der vorstehenden Ansprüche,
bei dem die Warteschlangen nur bei Bedarf angelegt und nicht genutzte Warteschlangen wieder freigegeben werden.

26. Kommunikationsnetz (100), umfassend zumindest einen Netzknoten nach einem der vorstehenden Ansprüche und/oder zumindest einen Netzknoten mit Mitteln zur Durchführung,der Schritte eines Verfahrens nach einem der vorstehenden Ansprüche.

## Claims

1. Network node (1-15) of a packet-oriented communication network (100), the nodes of which are connected to one another in accordance with the topology of the network in such a manner that a plurality of paths exists between the network nodes, having the following features:
- the network node is contained in at least one distribution fan (VF) which is derived from the network topology for an actual session between a network node arranged as transmitting node (A, C) and a network node arranged as receiving node (B, D) and which comprises all network nodes and paths which can be reasonably used for a distributed transmission of traffic flows (VS) allocated to the session in the communication network,
- for the network node, a branching pattern (i, t, d) is defined onto which the distribution fan is mapped and by means of which a line group (B) of outgoing ports (P) of the network node is determined to which the traffic flows allocated to the distribution fan are to be distributed, the paths allocated to the ports leading to at least two different adjacent network nodes,
- the network node, at least when at least one traffic flow is transmitted in currently distributed manner in accordance with the branching pattern by the network node, comprises at least one queueing system (Q₁₁ - Q₁ₙ) for the branching pattern which comprises at least one queue (Q₁₁).

2. Network node according to Claim 1,
comprising a separate queueing system (Q₂₁ - Q₂ₙ, Q₃₁ - Q₃ₙ) for each branching pattern (t, d), the line group of which differs from the line groups of the remaining branching patterns in at least one port.

3. Network node according to one of the preceding claims,
in which, in the case where a number of different distribution fans are mapped onto the same branching pattern, either a separate queueing system per different distribution fan or a single queueing system for all distribution fans is optionally provided.

4. Network node according to any one of the preceding claims,
in which at least one queueing system comprises at least two queues, at least one of the two queues being marked with a priority (401 - 403).

5. Network node according to any one of the preceding claims,
comprising timing information (501 - 503) at least for the packets waiting in a (high-) priority queue from which it can be read when the packets were entered in the queue or how long they have already been located in it.

6. Network node according to the preceding claim,
comprising a range of values for the timing information which, taking into consideration the transmission time of the shortest possible packet at the fastest port, is selected in such a manner that an overflow does not occur within a given maximum delay time of a prioritized packet.

7. Network node according to any one of the two preceding claims,
comprising a separate process running in parallel for sorting out and/or discarding packets, the further transmission of which no longer appears to be reasonable, taking into consideration the timing information.

8. Network node according to any one of the preceding claims,
comprising a second timing information for at least one of the queues, by means of which, for each port of the line group allocated to the queue, its respective last time of serving the queue is indicated.

9. Method for transmitting traffic flows (VS) in a packet-oriented communication network (100) by means of a network node (1-15) which is arranged in accordance with one of the preceding device claims,
comprising the following steps:
- incoming packets are entered in a queue (Q) allocated to the respective distribution fan, taking into consideration the distribution fan (VF) to which they are allocated,
- the packets are transmitted via a port (P) of a line group (B) which is determined by the mapping of the respective relevant distribution fan onto a network-node-specific branching pattern, the paths allocated to the ports of a line group in each case leading to at least two different adjacent network nodes.

10. Method according to the preceding claim,
in which the traffic flows of a branching group are deliberately transmitted nonuniformly distributed over the ports of the associated line group.

11. Method according to one of the preceding claims,
in which a scheduling process for deciding about outputting a next packet from one of the queues, which decision is made taking into consideration scheduling rules, is triggered by one of the outgoing ports.

12. Method according to the preceding claim,
in which the scheduling process is triggered by the port early enough before being released so that the decision about the next packet to be output and the next packet itself is available in sufficient time so that the next packet can be transmitted by the port immediately following the preceding packet.

13. Method according to one of the two preceding claims,
in which, in the case of there being a number of filled queues which are allocated to the port, the scheduling rules comprise a first predetermined criterion according to which it is decided which queue is served as the next one.

14. Method according to the preceding claim,
in which, in the case of an at least partial marking of the queues with priorities (401 - 403) the filled queues having a low priority remain unconsidered in the decision for as long as at least one filled queue having a priority which is higher in comparison with these queues is still to be taken into consideration.

15. Method according to any one of the two preceding claims, in which the first criterion is arranged as one of the following criteria:
- principle of random selection,
- cyclic order,
- size of the line groups,
- shortest queue first,
- longest queue first,
- according to weighting of the queues,
- time elapsed since the last serving of this queue, particularly arranged as a FIFO principle in which the queue unserved for the longest time is the next one to be served, or
- number of ports responsible for serving it.

16. Method according to any one of Claims 11 to 15,
in which the scheduling rules, in the case of a queue filled with more than one packet, comprise a second criterion according to which the next packet to be transmitted is determined.

17. Method according to the preceding claim,
in which the second criterion is arranged as a FIFO.

18. Method according to any one of Claims 11 to 17,
in which an approximation to a desired target distribution value is effected by adaptively adapting the scheduling rules.

19. Method according to the preceding claim,
in which the required adaptation is calculated in advance and taken into consideration during the issuing of the scheduling rules.

20. Method according to any one of the two preceding claims,
in which the scheduling rules are adaptively adapted in active operation of the communication network.

21. Method according to the preceding claim,
in which the adaptation of the scheduling rules in the network node is effected autonomously and/or by triggering from the outside.

22. Method according to any one of the two preceding claims,
in which the adaptation is effected by taking into consideration a regulating criterion.

23. Method according to the preceding claim,
in which the regulating criterion comprises a comparison between the distribution actually achieved and the desired target distribution value, measuring the frequency of service for the various queues, measuring the resultant load of the ports per traffic class, measuring the average length of the different queues and/or measuring the maximum length of the various queues.

24. Method according to the preceding claim,
in which the measurements are carried out on the basis of the number of packets and/or taking into consideration the individual length of the individual packets.

25. Method according to any one of the preceding claims,
in which the queues are set up only when needed and unused queues are released again.

26. Communication network (100) comprising at least one network node according to any one of the preceding claims and/or at least one network node having means for carrying out the steps of a method according to one of the preceding claims.

## Revendications

1. Noeud de réseau (1-15) d'un réseau de communication orienté paquets (100) dont les noeuds sont reliés entre eux conformément à la topologie du réseau de manière telle qu'il existe une pluralité de chemins entre les noeuds de réseau, présentant les caractéristiques suivantes :
- le noeud de réseau est contenu dans au moins un éventail de répartition (VT) qui est dérivé de la topologie du réseau pour une relation de communication concrète entre un noeud de réseau réalisé en tant que noeud émetteur (A, C) et un noeud de réseau réalisé en tant que noeud récepteur (B, D) et qui comprend tous les noeuds de réseau et chemins qui peuvent être utilisés utilement pour une transmission répartie de flux de trafic (VS) affectés à la relation de communication dans le réseau de communication ;
- pour le noeud de réseau est déterminé un modèle de branchement (i, t, d) sur lequel l'éventail de répartition est appliqué et par lequel est déterminé un faisceau (B) de ports sortants (P) du noeud de réseau sur lesquels il s'agit de répartir les flux de trafic affectés à l'éventail de répartition, les chemins associés aux ports menant à au moins deux noeuds de réseau voisins différents ;
- le noeud de réseau comprenant, au moins lorsqu'au moins un flux de trafic est transmis actuellement par le noeud de réseau de manière répartie et conformément au modèle de branchement, au moins un système de files d'attente (Q11-Q1n) pour le modèle de branchement qui comprend au moins une file d'attente (a₁₁).

2. Noeud de réseau selon la revendication 1, avec un système de files d'attente séparé (Q11-Q1n, Q31-Q3n) pour chaque modèle de branchement (t, d) dont les faisceaux sont différents des faisceaux des autres modèles de branchement au niveau d'au moins un port.

3. Noeud de réseau selon l'une des revendications précédentes, dans lequel est prévu, pour le cas où plusieurs éventails de répartition différents sont appliqués sur le même modèle de branchement, au choix, un système de files d'attente séparé par éventail de répartition différent ou un unique système de files d'attente pour tous les éventails de répartition.

4. Noeud de réseau selon l'une des revendications précédentes, dans lequel au moins un système de files d'attente comprend au moins deux files d'attente, au moins l'une des deux files d'attente étant **caractérisée par** une priorité (401-403).

5. Noeud de réseau selon l'une des revendications précédentes, avec une information temporelle (501-503) au moins pour les paquets en attente dans une file d'attente affectée d'une priorité (élevée), dans laquelle il est possible de lire quand les paquets ont été introduits dans la file d'attente respectivement depuis combien de temps ils s'y trouvent déjà.

6. Noeud de réseau selon la revendication précédente, avec une plage de valeurs pour l'information temporelle, laquelle est choisie compte tenu du temps de transmission du paquet le plus court possible sur le port le plus rapide de manière telle qu'il ne survient pas de dépassement de capacité dans les limites d'un temps de retard maximal donné d'un paquet affecté d'une priorité.

7. Noeud de réseau selon l'une des deux revendications précédentes, comprenant un processus séparé parallèle pour éliminer au tri et/ou rejeter des paquets dont la transmission subséquente ne semble plus utile compte tenu de l'information temporelle.

8. Noeud de réseau selon l'une des revendications précédentes, comprenant une deuxième information temporelle pour au moins l'une des files d'attente, laquelle indique, pour chaque port du faisceau affecté à la file d'attente, le respectivement dernier instant auquel celui-ci a servi la file d'attente.

9. Procédé de transmission de flux de trafic (VS) dans un réseau de communication orienté paquets (100) par un noeud de réseau (1-15) qui est réalisé selon l'une des revendications précédentes relatives au dispositif, comportant les étapes suivantes :
- des paquets entrants sont introduits, compte tenu de l'éventail de répartition (VF) auquel ils sont affectés, dans une file d'attente (Q) affectée à l'éventail de répartition respectif ;
- les paquets sont transmis via un port (P) d'un faisceau (B) qui est déterminé par l'application de l'éventail de répartition respectivement pertinent sur un modèle de branchement spécifique au noeud du réseau, les chemins associés aux ports d'un faisceau menant chacun à au moins deux noeuds de réseau différents voisins.

10. Procédé selon la revendication précédente, dans lequel les flux de trafic d'un groupe de branchement sont transmis de manière répartie, ciblée et irrégulière via les ports du faisceau associé.

11. Procédé selon l'une des revendications précédentes, dans lequel un processus d'ordonnancement est déclenché par l'un des ports sortants en vue de la décision sur l'émission d'un paquet suivant de l'une des files d'attente, laquelle est prise compte tenu de règles d'ordonnancement.

12. Procédé selon la revendication précédente, dans lequel le processus d'ordonnancement est ainsi déclenché par le port assez longtemps, avant sa libération, pour que la décision sur le paquet suivant à émettre et le paquet suivant lui-même soient à disposition assez longtemps à l'avance pour que le paquet suivant puisse être transmis par le port immédiatement à la suite du paquet précédent.

13. Procédé selon l'une des deux revendications précédentes, dans lequel les règles d'ordonnancement, dans le cas de plusieurs files d'attente remplies qui sont affectées au port, incluent un premier critère prédéterminé conformément auquel il est décidé quelle file d'attente est la suivante à être servie.

14. Procédé selon la revendication précédente, dans lequel, dans le cas d'un marquage au moins partiel des files d'attente avec des priorités (401-403), lors de la décision, les files d'attente remplies affectées d'une priorité faible ne sont pas prises en compte, tant qu'il faut encore prendre en considération au moins une file d'attente remplie affectée d'une priorité supérieure en comparaison avec ces files d'attente.

15. Procédé selon l'une des deux revendications précédentes, dans lequel le premier critère se présente sous la forme de l'un des critères suivants :
- principe du hasard,
- ordre cyclique,
- taille des faisceaux,
- la file d'attente la plus courte d'abord,
- la file d'attente la plus longue d'abord,
- selon la pondération des files d'attente,
- temps écoulé depuis la dernière fois que cette file d'attente a été servie, se présentant plus particulièrement sous la forme du principe FIFO dans lequel la file d'attente qui n'a pas été servie depuis le plus longtemps est la suivante à être servie, ou
- nombre des ports qui sont compétents pour la servir.

16. Procédé selon l'une des revendications 11 à 15, dans lequel les règles d'ordonnancement, dans le cas d'une file d'attente remplie avec plus qu'un paquet, incluent un deuxième critère conformément auquel est déterminé le paquet qui est le suivant à transmettre.

17. Procédé selon la revendication précédente, dans lequel le deuxième critère se présente sous la forme d'un FIFO.

18. Procédé selon l'une des revendications 11 à 17, dans lequel une approche d'une valeur cible de répartition souhaitée est obtenue par ajustement adaptatif des règles d'ordonnancement.

19. Procédé selon la revendication précédente, dans lequel l'adaptation requise est calculée d'avance et est prise en compte lors de l'attribution des règles d'ordonnancement.

20. Procédé selon l'une des deux revendications précédentes, dans lequel les règles d'ordonnancement sont ajustées adaptativement pendant le fonctionnement du réseau de communication.

21. Procédé selon la revendication précédente, dans lequel l'adaptation des règles d'ordonnancement, dans le noeud du réseau, a lieu de manière autonome et/ou du fait d'une impulsion extérieure.

22. Procédé selon l'une des deux revendications précédentes, dans lequel l'adaptation est provoquée compte tenu d'un critère régulateur.

23. Procédé selon la revendication précédente, dans lequel le critère régulateur inclut une comparaison de la répartition effectivement obtenue avec la valeur cible de répartition souhaitée, une mesure de la fréquence avec laquelle les différentes files d'attente sont servies, une mesure de la charge résultante des ports pour chaque classe de trafic, une mesure de la longueur moyenne des différentes files d'attente et/ou une mesure de la longueur maximale des différentes files d'attente qui se présente.

24. Procédé selon la revendication précédente, dans lequel les mesures sont effectuées sur la base du nombre des paquets et/ou compte tenu de la longueur individuelle des différents paquets.

25. Procédé selon l'une des revendications précédentes, dans lequel les files d'attente ne sont créées qu'en cas de besoin et des files d'attente non utilisées sont de nouveau libérées.

26. Réseau de communication (100), comprenant au moins un noeud de réseau selon l'une des revendications précédentes et/ou au moins un noeud de réseau avec des moyens permettant l'exécution des étapes d'un procédé selon l'une des revendications précédentes.
